# EUROPÄISCHE PATENTSCHRIFT

(11) **EP 3 366 466 B1**
(45) Veröffentlichungstag und Bekanntmachung des Hinweises auf die Patenterteilung: **12.06.2019**
(21) Anmeldenummer: 17157876.8
(22) Anmeldetag: 24.02.2017
(51) Int. Cl.: B32B 7/12, B32B 27/08, B32B 27/10, B32B 27/12, B32B 27/20, B32B 29/00, B32B 3/26, B32B 27/32, B32B 27/34, B32B 27/36

(54) **ANTISTATISCHES DEKORLAMINAT**
ANTISTATIC DECORATIVE LAMINATE
STRATIFIÉ DÉCORATIF ANTISTATIQUE

(43) Veröffentlichungstag der Anmeldung: 29.08.2018
(73) Patentinhaber: Profol Kunststoffe GmbH, 83128 Halfing (DE)
(72) Erfinder: Bayer, Helmut, 83361 Kienberg (DE); Maier, Konrad, 83512 Wasserburg (DE); Altenweger, Josef, 83026 Rosenheim (DE); Komorek, Andrea, 83139 Untershofen, Söchtenau (DE)
(74) Vertreter: SSM Sandmair

(56) Entgegenhaltungen:
- WO-A1-2016/030215
- US-A1- 2002 055 006

## Beschreibung

Die Erfindung betrifft ein antistatisches Dekorlaminat, ein Verfahren zu seiner Herstellung sowie die Verwendung des erfindungsgemäßen antistatischen Dekorlaminats als Wand- oder Dachpaneele oder in der Herstellung von Wand- oder Dachpaneelen, als Möbelfolie, als 3D-Folie und/oder als graphische Folie.

Günstige Herstellungs- und Materialpreise, leichte Verarbeitbarkeit, chemische Beständigkeit, hohe Transparenz, gute Abriebfestigkeit und hohe Elastizität haben in der Vergangenheit Polyvinylchlorid (PVC) zum vorherrschenden künstlichen Grundstoff für Bodenbeläge, Wandverkleidungen und Möbelfolien werden lassen.

Vielfältige Anwendung haben beispielsweise PVC-Folien in der Herstellung von preiswerten Möbeloberflächen, Wandverkleidungen oder Bodenbelägen gefunden, in denen Holz- oder Steinoberflächen imitiert werden, teilweise unter Verwendung von Holz, teilweise unter Verwendung von mit Holz- oder Steindesign bedruckten Papier- oder Folienschichten.

Den Vorteilen stehen Nachteile in der mangelnden Gesundheits- und Umweltverträglichkeit des PVC sowie im Brandverhalten gegenüber, die die Suche nach alternativen Werkstoffen als Ersatz für das PVC befeuern.

Als Ersatzmaterialien sind vielfach Polymere wie Polyolefine, Polyamide, Polyurethane, Polystyrol, Polyester sowie deren Copolymere und Abkömmlinge vorgeschlagen worden, die ähnlich günstig und leicht zu verarbeiten sind, allerdings in Bezug auf ihre mechanischen Eigenschaften und Abriebfestigkeit dem PVC unterlegen waren. Oftmals sind die Sichtseiten herkömmlicher Bodenbeläge, Wandverkleidungen, Möbelfolien und ähnlicher Verbünde durch Lack- oder Harzschichten, bspw. aus Melaminharz, verstärkt. Dies erhöht die Kosten der Verbundfolien durch höhere Rohstoff- und Verarbeitungskosten und verschlechtert ihre Ökobilanz. Es sind auch bereits Verbundmaterialien beschrieben worden, die versuchen, die Vorteile von preisgünstigen Polyolefinen als Substratmaterial mit den überlegenen mechanischen Eigenschaften polarer Polymere zu verbinden. Hierbei stoßen die Bemühungen bis heute auf Schwierigkeiten, einen sicheren, beständigen Verbund der Schichten, möglichst ohne Verwendung von Klebstoff und Lösungsmittel zu gewährleisten, ein effizientes, kontinuierliches Verfahren für die Herstellung des Verbundes bereitzustellen und das Herstellungsverfahren so auszugestalten, daß das Erscheinungsbild der Mehrschichtfolie höchsten ästhetischen Anforderungen genügt und als Ersatz für natürliche Werkstoffe wie beispielsweise Holz-, Stein- oder Korkoberflächen dienen kann. WO 95/08593 A1 beschreibt abnutzungsbeständige Bodenbeläge als Alternative zu PVC-Bodenbelägen, die eine transparente Deckschicht aus Ionomer, über eine Klebstoffschicht auf eine Dekorschicht auflaminiert, aufweist. DE 41 07 150 A1 beschreibt eine mehrschichtige Fußbodenbelagfolie, wobei eine Oberfolie, die polare Gruppen enthaltenden Kunststoff enthält, über eine Haftschicht, Haftfolie, Reaktantschicht oder Haftvermittlerschicht auf eine Unterfolie angeordnet wird. DE 10 2012 103 016 A1 beschreibt einen Folien-Kaschierverbund mit mindestens zwei Kunststoffolien, enthaltend eine Trägerfolie und eine Nutzfolie, wobei die Nutzfolie auf einer Seite der Trägerfolie angeordnet ist und bedruckt sein kann, die Trägerfolie eine vorzugsweise pigmentierte Polyolefin-Folie ist und die Nutzfolie aus einem thermoplastischen Polyurethan besteht. Diese Kaschierverbünde werden ausdrücklich unter Vermeidung eines Dekorpapiers in Kleb- oder Heißkaschierung hergestellt und werden zur Verwendung in der Fußboden-, Möbel-, Interieur- und/oder Exterieur-Industrie empfohlen.

Zu den besonderen Anforderungen an Dekorlaminate, insbesondere an Fußbodenbeläge, gehört der Schutz vor elektrostatischer Aufladung. Das Einhalten der Norm für die Begehspannung nach DIN EN 1815:2016-12 stellt sicher, daß unangenehme Entladungen über die Haut vermieden werden oder Staubfreiheit gewährleistet werden kann. Fußböden in Räumen zur Fertigung elektronischer Bauteile setzen besondere Standards an antistatischer Wirksamkeit voraus. Auch in der Herstellung der Laminate, beispielsweise von Bodenbelags-Laminaten, können statisch aufgeladene Dekorfolien/Dekorlaminate Probleme bereiten. Um Wirkung zu entfalten, werden konventionell Antistatika in der sichtseitig obersten polymeren thermoplastischen Schicht von Bodenbelags-Laminaten und -Schichtkörpern vorgesehen. Zum Schutz gegen Abrieb werden solche antistatischen Laminate konventionell mit einem Schutzlack versehen. Das Lackieren stellt hierbei einen im Prinzip unerwünschten, apparativ aufwendigen weiteren Verfahrensschritt dar, der Mehrkosten und Lösungsmittelemissionen verursachen kann.

WO 2013/143903 A1 beschreibt eine PVC-freie Oberflächenfolie für Faservlies-basierte Oberflächenbeläge, die sich aufgrund Imprägnierung des Faservlieses auf Polyolefin-Basis durch besonders gute Verklebbarkeit mit der zu bedeckenden Oberfläche auszeichnen sollen. Allgemein kann dieser Druckschrift zufolge eine "Verschleißschicht" verschiedene Kunststoffe enthalten, darunter Ionomere. Eine darunterliegende "Trägerschicht" aus mit Säureanhydrid modifiziertem Polymer kann unterschiedlichste Füllstoffe und Funktionsadditive enthalten. Eine Kombination einer ionomerhaltigen "Verschleißschicht" und einer "Trägerschicht" enthaltend Antistatika wird nicht beschrieben. Im Gegenteil weist die Folie eine eventuelle dekortragende Schicht ausnahmslos zwischen "Verschleißschicht" und "Trägerschicht" auf und wird zum Schutz konkret mit einem Schutzüberzug aus Lack versehen.

US 2002/055006 A1 offenbart Mehrschichtfolien mit einem Schichtaufbau, der in einer äußersten Schicht ein klares Ionomer enthält und in einer angrenzenden darunterliegenden Schicht beispielsweise ein Ionomer/Polyamid-Blend.

Die vorliegende Erfindung stellt sich daher die Aufgabe, möglichst normgerecht antistatische Dekorlaminate bereitzustellen, die u.a. als Fußbodenbelag oder in der Herstellung von Fußbodenbelägen dienen können, die ohne Lackierschicht auskommen und in einem Minimum an Verfahrensschritten kontinuierlich hergestellt werden können, ohne nennenswerte Abstriche bei Abriebfestigkeit, Dauerhaftigkeit der antistatischen Wirkung, und weiterer Nutzeigenschaften wie Antistaining zu machen.

Fußbodenbeläge im Sinne der Erfindung sind vorzugsweise starre Fußbodenbeläge wie Paneelen und Fliesen, die als Holzersatzlaminate oder beispielsweise als Ersatz für Steinböden dienen können.

Starre Dekorlaminate als Fußbodenbeläge, die optional Antistatika enthalten können, werden unter anderem in WO 2016/088897 A1, WO 2016/047780 A1 oder JP 2016064628 A beschrieben. All diesen Offenbarungen ist gemein, daß zur Herstellung geeigneter Oberflächeneigenschaften wie Stainingeigenschaften oder Verschleiß schutz ein gehärteter, vernetzter Überzug (Lack) benötigt wird. Alternativ werden beispielsweise in WO 1995/035210 A1 Bodenbeläge beschrieben, die migrierende Antistatika wie kationische, anionische, nichtionische oder amphotere oberflächenaktive Mittel in einer äußersten ionomerhaltigen Schicht aufweisen, die über eine Heißklebstoffschicht auf eine dekortragende Schicht auflaminiert sind. WO 03/037622 A1 beschreibt antistatische Deckfolien unter anderem für Fußböden, Wände und Decken, die als äußerste Schicht eine Verschleißschicht aus elektrisch leitendem ionomeren Polyelektrolyt (IPE), zusätzlich gegebenenfalls Füllstoffe, aufweist. Die Deckfolie weist elektrisch mit der Verschleißschicht verbunden eine "zweite" Schicht auf, die beispielsweise durch darin enthaltende elektrisch leitende anorganische Partikel leitfähig gemacht ist. Als Matrixmaterialien werden beispielsweise Polyolefine, Ethylen-Methacrylsäure-Butylacrylatterpolymere oder Polyurethan-Elastomere vorgeschlagen. Lediglich die oberste Schicht ist transparent ausgebildet, und sofern eine dekortragende Schicht mit aufgedruckten Mustern, Texten oder Holzimitationen vorgesehen ist, befindet sich diese Schicht zwischen der äußersten Schicht, der Verschleißschicht und der antistatisch wirkenden "zweiten Schicht". Hierzu muß die dekortragende Schicht eigens durch geeignete Zusätze leitfähig gemacht werden.

US 2015/0179315 A1 beschreibt antistatische Polymerzusammensetzungen, die ein Gemisch aus einem Basisharz aus Polyolefin und Ethylencopolymer mit einem gepfropften EthylenCopolymer mit Polyetheramidsegmenten als antistatische Schicht enthalten. Ionomere als Bestandteile dieser Schicht werden nicht beschrieben. US 2015/0179315 empfiehlt die antistatische Polymerzusammensetzung als koextrudierbare Zwischenschicht "intermediate layer" einer Mehrschichtstruktur, wobei unterschiedlichste Materialien für die Oberflächenschicht vorgeschlagen werden, darunter Ionomere, Polyester, Polycarbonate, Polymethylmethacrylate etc.. US 2015/0179315 erwähnt weder eine dekortragende Schicht, noch eventuelle damit zusammenhängende Herausforderungen oder Probleme von Kompatibilität und Haftung der Schichten.

Es besteht daher weiterhin ein Bedürfnis nach einem antistatischen Dekorlaminat, das eine einfache und ökonomische kontinuierliche Herstellung erlaubt, möglichst im Coextrusionsverfahren, das einen sparsamen Einsatz von Haftvermittlern und insbesondere von Klebstoffen bis hin zu deren vollständiger Vermeidung erlaubt, das bei exzellenter Adhäsion der Schichten untereinander, sehr guter Antiverschleiß- und Antistainingeigenschaften sowie ohne wesentliche Einbußen in den antistatischen Eigenschaften dennoch durch eine hervorragende Transparenz, Klarheit und Farbneutralität der darüberliegenden Schichten, den ästhetischen Eindruck und die Bedruckbarkeit der dekortragenden Schicht nicht beeinträchtigt, sondern bestens zur Geltung bringt.

Die vorliegende Erfindung löst mindestens eins, vorzugsweise mehrere bis alle der angesprochenen Probleme.

Erfindungsgemäß wird die Aufgabe gelöst durch ein Dekorlaminat umfassend eine Sichtseite und eine Substratseite, sichtseitig umfassend mindestens die folgenden unmittelbar aufeinanderfolgenden, miteinander haftend verbundenen Schichten F-A und substratseitig der Schicht A noch eine oder mehrere dekortragende Schicht(en) D, dadurch gekennzeichnet, dass die Schicht F sichtseitig die äußerste Schicht darstellt und 90 bis 100 Gew.-% extrudierbares thermoplastisches Ionomer enthält; die an die Schicht F anschließende Schicht A 70 bis 90 Gew.-% extrudierbares thermoplastisches Ionomer enthält; und
Schicht A insgesamt 10 bis 30 Gew.-% eines oder mehrerer nichtmigrierender Antistatika enthält.

Das Ionomer oder die Ionomere, die erfindungsgemäß in den Schichten F und A zur Anwendung kommen, müssen per se keine besondere elektrische Leitfähigkeit aufweisen. Bevorzugt werden für die Schichten F und A elektrisch per se nichtleitende Ionomere verwendet.

Wenn erfindungsgemäß die Schicht F die äußerste Schicht darstellt, ist darunter zu verstehen,, daß das Dekorlaminat keine Lackschicht und keinen aus härtbaren bzw. vernetzbaren oder vernetzten Monomeren bestehenden Überzug enthält und ganz besonders bevorzugt aus einer einzigen thermoplastischen Ionomerschicht besteht, die gegebenenfalls 1 bis 10 Gew.-% Füllstoffe enthalten kann.

Während nämlich konventionell eine gewünschte antistatische Funktion meist durch die Verwendung von Antistatika in der äußersten sichtseitigen thermoplastischen Schicht erzielt wird, werden Antistatika erfindungsgemäß in der Funktionsschicht A unter einer darüberliegenden thermoplastische Ionomere enthaltenden oder reinen thermoplastischen und antistatikafreien Ionomerschicht F eingesetzt. Bevorzugte Schichtdicke der sichtseitigen Schicht F ist im Bereich von 10 bis 100 µm, insbesondere 20 bis 80 µm oder noch stärker bevorzugt 30 bis 50 µm. Die Abriebsanfälligkeit konventioneller Dekorlaminate, die migrierende ANtistatika verwenden und die ohne schützende zusätzliche Lackschicht im Gebrauch bald ihren Antistatik-Effekt verlieren, kann so auch ohne den Einsatz einer Lackschicht erfindungsgemäß überraschend überwunden werden, ohne daß Abstriche bei der Wirksamkeit des antistatischen Effekts und/oder bei Antistaining-Eigenschaften oder bei der Abriebfestigkeit gemacht werden müssen.

Ein erfindungsgemäßes Dekorlaminat kann somit beispielweise und nicht abschließend einen Schichtaufbau F-A-D oder F-A-B-D oder auch F-A-B-C-D oder F-A-B1-C1-B2-C2-D aufweisen, wobei die Schichten B weitere, vorzugsweise extrudierbare und thermoplastische polymere Schichten darstellen, die jeweils extrudierbare thermoplastische Kunststoffe enthalten können, und die Schichten C bevorzugt modifizierte thermoplastische Kunststoffe beispielsweise zur Haftvermittlung enthalten können. Besonders bevorzugt im Sinne der Erfindung ist das Dekorlaminat sichtseitig der dekortragenden Schicht D vollständig oder nahezu vollständig transparent, weist bevorzugt eine Transparenz (400-800 nm) von mindestens 85, besser mindestens 90 oder auch mindestens 95% oder mindestens 98 % nach DIN 5033-1:2009-05, DIN 5036-3 und bevorzugt eine Trübung (Haze) von weniger als 2 %, besser weniger als 1 %, insbesondere weniger als 0,5 % oder auch weniger als 0,1 % beziehungsweise weniger als 0,01 % nach ASTM D 1003-13 auf.

Antistatika vermeiden oder eliminieren elektrostatische Ladung, die durch den triboelektrischen Effekt oder auch kontaktlos durch eine hohe elektrische Spannung erzeugt werden kann. Elektrostatische Ladung kann im Herstellungsprozeß von Kunststoffbahnen beispielsweise beim Ablauf über Rollen erzeugt werden oder ist beim Gehen über Kunststoffoberflächen unvermeidlich. Antistatika haben dabei die Aufgabe, die Oberfläche des Kunststoffs selbst leitend zu machen, so daß aufgebaute Ladung rasch abgeleitet werden kann. Als nichtmigrierende (permanente) Antistatika werden solche Antistatika bezeichnet, die an ihrer relativen Position im Polymer verbleiben und nicht wie migrierende Antistatika zur Oberfläche wandern ("migrieren"). Als nichtabschließende Beispiele für nichtmigrierende Antistatika seien angeführt: leitfähige Fasern oder Nanomaterialien, Graphit, Ruße, Metalle oder intrinsisch leitfähige Polymere, insbeondere leitfähige organische Polymere (nichtmigrierende organische Antistatika). Im Gegensatz zu migrierenden Antistatika "wandern" nichtmigrierende ("permanente") Antistatika nicht mit der Zeit zur Oberfläche des umgebenden Kunststoffs, wo migrierende Antistatika durch Feuchtigkeit, beispielsweise bereits bei normaler Reinigung abgewaschen werden.

Unter den am meisten bevorzugten nichtmigrierenden Antistatika sind nichtvernetzende und nichtvulkanisierende organische Antistatika wie Polyester, Polyamide oder thermoplastische Copolyamide wie z.B. Polyetheramid. Diese sind farbneutral bzw. farblos und klar. Wie bereits ausgeführt wurde, enthält das erfindungsgemäße Dekorlaminat bevorzugt keine Lackierung oder Coating. Auf diese Weise kann sichergestellt werden, daß die Schichten F und A wie auch gegebenenfalls weitere Schichten wie die Schichten B und C vollständig oder nahezu vollständig transparent und farbneutral sind und so der Blick auf die dekortragende Schicht frei und ungetrübt bleibt. Dies ist beispielsweise bei der Verwendung üblicher permanenter anorganischer Antistatika wie Graphit, Anthrazit, Metallpartikeln, Rußen, Carbon Blacks, leitfähigen Nanopartikeln, oder auch leitfähiger Fasern beispielsweise Carbonfasern oder Geflechten und Verbünden daraus, die im Sinne der Erfindung unter die "anorganischen Antistatika" gezählt werden, nicht der Fall. Zudem ermöglicht die Wahl zueinander kompatibler unmittelbar aufeinanderfolgender Schichten, beispielsweise F-A-B-C, eine Coextrusion gemäß dem erfindungsgemäßen Verfahren und optimale Haftung bei minimalem Einsatz von Haftvermittlern und ohne den Einsatz von Klebstoffen mit den damit verbundenen Nachteilen. Zudem kann erfindungsgemäß darauf verzichtet werden, die dekortragende Schicht D mit antistatisch wirkenden Additiven zu versetzen. Dadurch können eine höhere Qualität des Drucks und des Bildes erzielt werden und werden gegebenenfalls auftretende Nachteile in der Haftung der dekortragenden Schicht zu den angrenzenden Schichten vermieden.

Besonders bevorzugt ist, daß Schicht F frei von Antistatika ist. Auf diese Weise wird zudem sichergestellt, daß die Mikro-Oberflächenstruktur des Ionomers so dicht und regelmäßig wie möglich verbleibt und auch bei mechanischer Beanspruchung noch optimale Anti-Staining-Eigenschaften erzielt werden.

Im erfindungsgemäßen Dekorlaminat enthält Schicht F vorteilhaft 75 bis 99 Gew.-%, bevorzugt 80 bis 98, insbesondere 94 bis 96 Gew.-% eines oder mehrerer extrudierbarer thermoplastischer Ionomere. Bevorzugt ist die Schicht F frei von Polyurethan.

Im erfindungsgemäßen Dekorlaminat enthält Schicht A vorteilhaft 60 bis 95 Gew.-%, bevorzugt 65 bis 85 Gew.-%, insbesondere 70 bis 80 Gew.-% eines oder mehrerer extrudierbarer thermoplastischer Ionomere.

Die Verwendung von extrudierbaren thermoplastischen Ionomeren in der äußersten Schicht F hat beispielsweise gegenüber herkömmlichen Kunststoffen wie Polyurethan den Vorteil besserer Oberflächeneigenschaften insbesondere bessere Anti-Staining-Eigenschaften bei gleicher oder besserer Verarbeitbarkeit, beispielsweise durch Koextrusion. Insbesondere wenn die extrudierbaren thermoplastischen Materialien der aneinander angrenzenden Schichten F und A chemisch ähnlich sind, wird die Adhäsion und damit die Peelingbeständigkeit verbessert.

Die Ionomere für die Schicht A können vorteilhaft unabhängig voneinander aus denselben Polymeren ausgewählt werden wie für die Schicht F. Zur Verwendung in der Schicht A und in der Schicht F besonders vorteilhafte Ionomere sind Ionomer-Blends, beispielsweise Blends von verschiedenen Ionomeren mit Polyamid(en) oder Ionomere, die eine Dichte (DIN EN ISO 1183-1:2013-04) im Bereich von 0,8 bis 1,2 g/cm³, insbesondere 0,9 bis 1,0 g/cm³, ganz besonders etwa 0,94 bis 0,96 g/cm³ aufweisen. Bevorzugt werden Ionomere, die einen Schmelzindex (Melt flow index MFI, bei 190 °C und 2,16 kg nach (DIN EN ISO 1183-1:2013-04) im Bereich von 0,4 bis 7,0 g/10 min, insbesondere 0,5 bis 5,7 g/10 min, ganz besonders vorteilhaft 0,6 bis 0,9 g/10 min oder auch 5,3 bis 5,6 g/10 min. Der Schmelzpunkt (DIN EN ISO 3146:2002-06) des eingesetzten Ionomers liegt vorteilhaft im Bereich von 85 bis 98 °C, insbesondere 88 bis 97 °C, ganz besonders vorteilhaft 89 bis 92 °C, oder auch 94 bis 96 °C. Der Erweichungspunkt (vicat softening point, DIN EN ISO 306:2012-01) des eingesetzten Ionomers liegt vorteilhaft im Bereich von 60 bis 70 °C, insbesondere 62 bis 68 °C, ganz besonders vorteilhaft bei etwa 65 °C. Beispielsweise wird erfindungsgemäß ein Surlyn-Ionomer oder ein Gemisch aus Surlyn-Ionomeren eingesetzt. Von Vorteil ist, wenn das Polymer oder das Polymergemisch transparent oder halbtransparent ist. Bevorzugt im Sinne der Erfindung ist das Dekor der dekortragenden Schicht D durch die Schichten A und F hindurch sichtbar.

Die Schichten F und A können ein oder mehrere identische Ionomere enthalten, bevorzugt dasselbe Ionomer oder Ionomergemisch umfassen. Insbesondere können die eingesetzten Ionomere selbst, d.h. bereits ohne zugesetztes Antistatikum, antistatische Eigenschaften besitzen oder nicht.

Die verwendeten Ionomere, Ionomergemische sowie Ionomer-Blends können in den Schichten A und F voneinander teilweise oder vollständig verschieden sein oder sich nur in den jeweiligen Anteilen unterscheiden. Besonders bevorzugt ist jedoch eine Ausführungsform, in der für die Schicht A dasselbe Ionomer, Ionomergemisch oder Ionomer-Blend verwendet wird wie in der Schicht F. In diesem Fall ist die Adhäsion der Schichten A und F besonders hoch, was sich vorteilhaft auf die Peelingbeständigkeit auswirkt. Besonders vorteilhaft sind die jeweiligen eingesetzten Ionomere identisch.

Der Ionomeranteil der Schicht A kann aus einem Ionomer bestehen oder ein Gemisch aus zwei oder mehreren Ionomeren oder ein Ionomer-Blend aufweisen. In einer Ausführungsform besteht der Ionomeranteil der Schicht A im wesentlichen aus einem Ionomer. In einer bevorzugten Ausführungsform liegt der Ionomeranteil der Schicht A im Bereich von 75 bis 100 Gew.-%, insbesondere 80 bis 98 Gew.-%, stärker bevorzugt 90 bis 97 Gew.-% und ganz besonders 94 bis 96 Gew.-%. Der Anteil an Füllstoffen und Funktionsadditiven in der Funktionsschicht liegt somit im allgemeinen zwischen 0 und 25 Gew.-%, bevorzugt im Bereich von 1 bis 25 Gew.-%, insbesondere 2 bis 20 Gew.-%, stärker bevorzugt 3 bis 10 Gew.-% und ganz besonders 4 bis 6 Gew.-%.

Erfindungsgemäß enthält die Schicht A des Dekorlaminats insgesamt 5 bis 40 Gew.-%, bevorzugt 15 bis 35 Gew.-%, insbesondere bevorzugt 20 bis 30 Gew.-% eines oder mehrerer nichtmigrierender Antistatika.

In den erfindungsgemäßen Dekorlaminaten kann Schicht F 0 bis 25 Gew.-%, bevorzugt 3 bis 10 Gew.-%, insbesondere 5 Gew.-% eines oder mehrerer Funktions- und/oder Füllstoffe enthält, wobei die Funktionsadditive bevorzugt ausgewählt sind aus der Gruppe bestehend aus UV-Stabilisatoren, UV-Absorber, Farbpigmenten, Wachsen, Gleitmitteln, Anti-Slip-Additiven, antimikrobiellen sowie dehäsiv wirkenden Additiven und Flammschutzmitteln sowie deren Gemischen und die Füllstoffe bevorzugt ausgewählt sind aus der Gruppe bestehend aus Korund, Titandioxid, Sand, Talkum, Kreide, Kieselsäure, Glasperlen sowie deren Gemischen.

Schicht A kann einen oder mehrere Funktions- und/oder Füllstoffe enthalten. Bevorzugt enthält die Schicht A neben den nichtmigrierenden Antistatika jedoch keine Funktionsadditive, insbesondere bevorzugt keine Füllstoffe.

Durch die eingesetzten Kunststoffe, den erfindungsgemäßen Schichtaufbau sowie das erfindungsgemäße Verfahren kann ganz oder weitgehend auf die Anwesenheit von Weichmachern in den Kunststoffen verzichtet werden. Ebenso entfällt die Gegenwart etwaiger krebserzeugender Restmonomere, wie sie beispielsweise im PVC auftreten. Dennoch werden die eingangs genannten hohen Abriebfestigkeiten, Flexibilität, Einfachheit und Ökonomie in der Herstellung, Optik und Haptik des Produkts erzielt, so daß die vorliegende Erfindung einen mindestens gleichwertigen Ersatz für PVC-Folien darstellt - ohne die damit verbundenen Nachteile aufzuweisen. Insbesondere ist bevorzugt, wenn das erfindungsgemäße Dekorlaminat frei von PVC, Vinylchloridmonomeren und/oder Melaminharz ist.

Die Schichtdicke der Schicht A ist im erfindungsgemäßen Dekorlaminat unkritisch. Bevorzugt werden aus verfahrenstechnischen Gründen Schichtdicken im Bereich von 5 bis 30 µm, insbesondere 10 bis 20 µm. Die Schichtdicke der Schicht F wird jedoch bevorzugt so eingestellt, daß sie im Bereich von 10 bis 100 µm stärker bevorzugt 20 bis 80 µm, besonders bevorzugt 30 bis 50 µm liegt, da unterhalb des genannten Bereichs die Kratzfestigkeit nachlassen kann und oberhalb des genannten Bereichs sich die antistatische Wirkung verringern kann. Alle Angaben zu Schichtdicken beziehen sich in geprägten Bereichen auf arithmetische Mittel bzw. auf Schichtdicken ohne Prägung.

Die Dicke der Schichten bzw. des Dekorlaminats oder Schichtenverbunds wird erfindungsgemäß als arithmetischer Mittelwert fachüblich über den Durchsatz der Extruder eingestellt und überwacht.

Je nach Einsatzzweck und weiterem Schichtaufbau der erfindungsgemäßen Dekorlaminate kann es bevorzugt sein, zusätzlich gegebenenfalls eine, zwei oder mehrere weitere Schichten, die thermoplastische Polymere enthalten, sowie zusätzlich optional eine oder mehrere Haftvermittlerschicht(en) vorzusehen. Kern der Erfindung ist jedoch in jedem Fall die unmittelbare Aufeinanderfolge der Schicht F als äußerster Schicht und daran anschließend der Schicht A wie oben definiert.

Eine Haftvermittlerschicht kann eine homogene Schicht darstellen. Sie kann alternativ mehrere, beispielsweise zwei, drei oder mehr Schichten umfassen, die jeweils gleiche oder verschiedene modifizierte Kunststoffe zur Haftvermittlung enthalten. In manchen Ausführungsformen wird durch eine Abfolge unterschiedlicher haftvermittelnder modifizierter Kunststoffe eine bessere Haftung der angrenzenden Schichten erzielt. Geeignete Materialien für die Haftvermittlerschichten umfassen ein oder mehrere mit Maleinsäureanhydrid, alkyliertem Maleinsäureanhydrid und/oder Carbonsäure modifizierte(s) Polymer(e). Der oder die modifizierte Kunststoff(e) zur Haftvermittlung kann/können vorteilhaft ein oder mehrere Copolymer(e) oder gepfropfte (Co-)Polymere von Carbonsäurefunktionalität tragenden Monomeren, insbesondere Maleinsäureanhydrid und/oder alkyliertem Maleinsäureanhydrid mit Polypropylen, Polyethylen (bspw. LDPE oder LLDPE), Ethyl-Vinylacetat (EVA), Ethylen-Butyl-Acrylat (EBA), Ethylen-Ethl-Acrylat (EEA), Ethylen-Acrylsäure (EAA), Ethylen-Methacrylsäure (EMAA), Maleinsäureacetat (MAA) und/oder Polyacrylat-Kautschuk (ACM) umfassen. Auf diese Weise lassen sich die erfindungsgemäßen Dekorlaminate selbst bei mehrschichtigem Aufbau unter Verwendung unpolarer dekortragender Schicht(en) beispielsweise klebstofffrei und unter Minimierung der Verfahrensschritte in Coextrusion und unmittelbarer Schmelzekaschierung herstellen.

Durch die Verwendung von Haftvermittlern können Klebstofflaminierungen vermieden werden, beispielsweise zur Verbindung der Schichten B und D oder A und D. bevorzugt ist das erfindungsgemäße Dekorlaminat frei von Klebstoffen und/oder organischen Lösungsmitteln. In einer weniger bevorzugten Ausführungsform können im erfindungsgemäßen Dekorlaminat jedoch auch mittels Klebstoff laminierte Schichten umfaßt sein.

In einer Ausführungsform der Erfindung enthält die mindestens eine dekortragende Schicht D ein extrudierbares thermoplastisches Polymer, ausgewählt aus der Gruppe bestehend aus Polyethylenen, Polypropylenen und Polybutylenen, Polystyrol, Polyamid, Polyester wie Polyethylenterephthalat (PET) sowie deren Gemischen. Ein Vorteil solcher kunststoffolienhaltiger dekortragender Schichten sind ihre gute Bedruckbarkeit, gute Prozessfähigkeit, ihre Wasserfestigkeit sowie ihre chemische Beständigkeit.

Besonders bevorzugte Dekorlaminate der vorliegenden Erfindung sind dadurch gekennzeichnet, daß in die Oberfläche des Dekorlaminats sichtseitig ein oder mehrere Muster oder Strukturen plastisch eingeprägt sind, wobei die plastischen Muster oder Strukturen weniger tief, gleich oder tiefer als die Schichtdicke der äußeren Schicht F eingeprägt sein können. Auf diese Weise können beispielsweise Holzmaserungen oder Steinoberflächen realitätsgenau nachgeahmt werden.

Die erfindungsgemäßen Dekorlaminate werden bevorzugt in einem Verfahren hergestellt, das die Coextrusion mindestens der Schichten F und A umfaßt, bevorzugt beispielsweise oben definierte Schichten F, A und B oder etwa Schichten F, A, B und C oder mehr. Vorteilhaft kann gleichzeitig im selben Schritt während der Schmelzekaschierung des Dekorlaminats auf der Sichtseite ein oder mehrere Muster plastisch aufgeprägt werden, wobei die Temperatur des Schichtenverbunds zwischen dem ersten und dem zweiten Verfahrensschritt nicht unter die Schmelztemperatur des coextrudierten Schichtenverbunds sinkt. Auf diese Weise kann ein erfindungsgemäßes, strukturiertes Dekorlaminat erhalten werden.

Vorteilhafterweise wird hierbei der zweite Verfahrensschritt bei einer Temperatur von 150-300 °C ausgeführt. Das erfindungsgemäße Verfahren wird bevorzugt kontinuierlich durchgeführt. Bevorzugt wird die Prägung auf der Sichtseite mit dem bedruckten Dekor der dekortragenden Schicht synchronisiert.

Die Coextrusion erfolgt dabei auf konventionelle Weise unter dem Fachmann geläufigen Bedingungen. Besonders vorteilhafte Eigenschaften der erfindungsgemäßen Dekorlaminate können dadurch erzielt werden, daß die für sich bekannten Verfahrensschritte des Schmelzekaschierens und Prägens in einer bevorzugten Ausführungsform der Erfindung gleichzeitig und ohne erneuten Aufheizvorgang im kontinuierlichen Betrieb durchgeführt werden.

Das Dekorlaminat gemäß der vorliegenden Erfindung kann beispielsweise und ideal als Bodenbelag oder in der Herstellung eines Fußbodenbelags, Bodenbelags, als Wand- oder Dachpaneele oder in der Herstellung von Wand- oder Dachpaneelen, als Möbelfolie, Türfolie, 3D-Folie insbesondere in der Herstellung von Sperrholz- oder Spanplatten und/oder als graphische Folie, insbesondere Druckfolie verwendet werden.

Die Erfindung betrifft daher auch einen Bodenbelag, Fußbodenbelag, Wand- und Dachpaneele, eine Möbelfolie, Türfolie, 3D-Folie, Sperrholz und Spanplatten und graphische Folie, insbesondere Druckfolie umfassend ein erfindungsgemäßes Dekorlaminat. Schichtkörper gemäß der vorliegenden Erfindung, umfassend ein erfindungsgemäßes Dekorlaminat, insbesondere strukturiertes Dekorlaminat, sind insbesondere ein Fußbodenbelag, Möbelfolie oder 3D-Folie.

Ein erfindungsgemäßer Fußbodenbelag kann dabei vorteilhaft eine weitere, an Schicht D anschließende Substratschicht E aufweisen, die mit Schicht D unmittelbar, über eine Haft- oder Klebeschicht, durch Kaschierung oder durch mechanische Verbindungselemente verbunden ist. Die Substratschicht E wird im Rahmen der vorliegenden Offenbarung nicht als Bestandteil des Dekorlaminats angesehen.

Die Substratschicht E umfasst dabei bevorzugt eine der folgenden Schichten: Rutschverhindererschicht, Wärmedämmschicht, Schall-, insbesondere Trittschalldämpfschicht, Wärmeleitschicht, Klebeschicht, Sperrholz- oder Spanplattenschicht, Wood-Plastic-Composite (WPC)-Schicht, Faserbetonschicht.

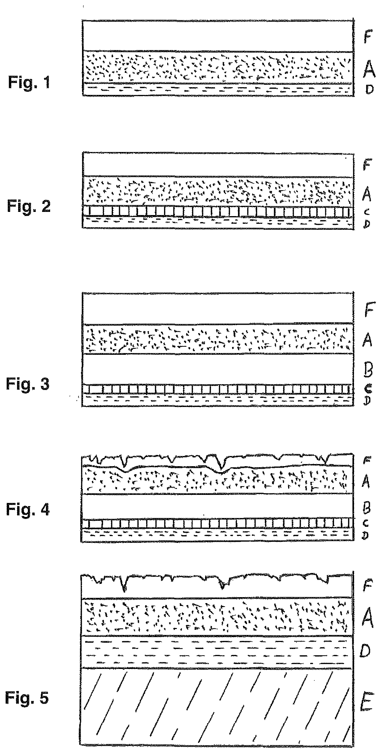

Fig. 1 zeigt einen Querschnitt einer Ausführungsform des Dekorlaminats der Erfindung mit dem Schichtaufbau F-A-D. Die Schichten sind in diesem Beispiel ausgeführt aus:
Schicht F (60 µm) 93 Gew.-% Surlyn-Ionomer und 7 Gew.-% Kieselsäure als Füllstoff;
Schicht A (200 µm) 80 Gew.-% Surlyn-Ionomer und 20 Gew.-% nichtmigrierendes organisches Antistatikum;
Schicht D (100 µm) mit Kaseinfarbe bedrucktes und mit Klebstoff (10 µm) beschichtetes Papier oder Kunststoffolie.

Die Schichten F und A werden coextrudiert und mit Klebstoff auf die dekortragende Schicht D auflaminiert.

Fig. 2 zeigt einen Querschnitt einer weiteren Ausführungsform des Dekorlaminats, beispielsweise als Fußbodenbelag mit dem Schichtaufbau F-A-C-D. Die Schichten sind in diesem Beispiel ausgeführt aus:
Schicht F (60 µm) 95 Gew.-% Surlyn-Ionomer und 5 Gew.-% Kieselsäure als Füllstoff;
Schicht A (220 µm) 85 Gew.-% Surlyn-Ionomer und 15 Gew.-% nichtmigrierendes organisches Antistatikum;
Schicht C (20 µm) Maleinsäureanhydrid-modifiziertes Polyethylen als modifizierter Kunststoff zur Haftvermittlung;
Schicht D (300 µm) mit Kaseinfarbe bedrucktes und mit Primer (10 µm) beschichtetes Papier oder Kunststoffolie.

Die Schichten F, A und C werden coextrudiert und unmittelbar mit der dekortragenden Schicht D schmelzekaschiert.

Fig. 3 zeigt einen Querschnitt einer weiteren Ausführungsform des erfindungsgemäßen Dekorlaminats, beispielsweise als Möbelfolie mit dem Schichtaufbau F-A-B-C-D. Die Schichten sind in diesem Beispiel ausgeführt aus:
Schicht F (70 µm) 100 Gew.-% Surlyn-Ionomer;
Schicht A (150 µm) 75 Gew.-% desselben Surlyn-Ionomers wie in Schicht F und 25 Gew.-% nichtmigrierendes organisches Antistatikum;
Schicht B (140 µm) 91 Gew.-% desselben Ionomers wie in Schichten F und A und 9 Gew.-% Metallocen-Polyethylen
Schicht C (5 µm) Maleinsäureanhydrid-modifiziertes Polyethylen als modifizierter Kunststoff zur Haftvermittlung;
Schicht D (100 µm) mit Kaseinfarbe bedrucktes und mit Primer (10 µm) beschichtetes PET.

Die Schichten F, A, B und C wurden coextrudiert und unmittelbar mit der dekortragenden Schicht D schmelzekaschiert.

In einer Abwandlung wird in Schicht D statt PET BOPP (biaxial orientiertes Polypropylen) eingesetzt.

Fig. 4 zeigt einen Querschnitt einer weiteren Ausführungsform des erfindungsgemäßen Dekorlaminats, beispielsweise als Bodenbelag mit dem Schichtaufbau F-A-B-C-D. Die Schichten sind in diesem Beispiel ausgeführt aus:
Schicht F (80 µm) 90 Gew.-% Surlyn-Ionomer und 10 Gew.-% Korund;
Schicht A (150 µm) 78 Gew.-% desselben Surlyn-Ionomers wie in Schicht F und 22 Gew.-% nichtmigrierendes organisches Antistatikum;
Schicht B (180 µm) 90 Gew.-% desselben Ionomers wie in Schichten F und A und 10 Gew.-% Metallocen-Polyethylen
Schicht C (5 µm) Maleinsäureanhydrid-modifiziertes Polyethylen als modifizierter Kunststoff zur Haftvermittlung;
Schicht D (100 µm) mit Kaseinfarbe bedrucktes und mit Primer (10 µm) beschichtetes PET

Die Schichten F, A, B und C werden coextrudiert und unmittelbar mit der dekortragenden Schicht D schmelzekaschiert, wobei im selben Verfahrensschritt gleichzeitig ein Holzmaserungsmuster aufgeprägt wird.

Fig. 5 zeigt einen Querschnitt einer weiteren Ausführungsform des erfindungsgemäßen Dekorlaminats aus Fig. 1, verwendet als Fußbodenpaneel mit dem Schichtaufbau F-A-D-E. Sperrholzschicht Schicht E (1500 µm) ist mittels Klebstoff mit dem erfindungsgemäßen Dekorlaminat verbunden.

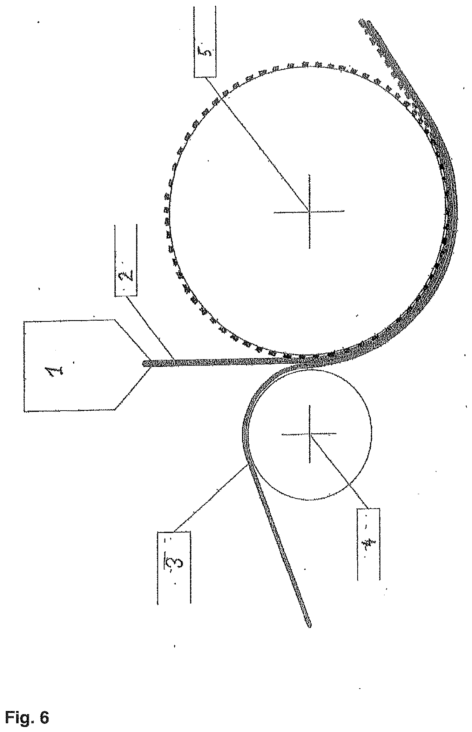

Fig. 6 zeigt einen schematischen und typischen Aufbau des erfindungsgemäßen Verfahrens. Hierbei wird in der Düse (1) ein Verbund aus einer beispielsweise aus Füllstoffe enthaltendem Ionomer bestehenden Schicht F, einer ionomerhaltigen und nichtmigrierende Antistatika enthaltenden Schicht A und einer (substratseitigen) Haftvermittlerschicht C als Schmelze (2) bei einer Temperatur von 200 bis 280 °C coextrudiert und unmittelbar darauf bei derselben Temperatur auf der Substratseite mit einer bedruckten Papierschicht D (3), die über eine Walze (4), beispielsweise eine Gummiwalze zugeführt wird, in Verbindung gebracht. Schicht D und der Schichtverbund F-A-C können gleichzeitig oder unmittelbar nach dem Zusammenbringen bei Temperaturen beispielsweise im Bereich von 150 bis 300 °C zwischen Prägewalze (5) und Walze (4) schmelzekaschiert und in dieser Ausführungsform gleichzeitig sichtseitig geprägt werden.

### Beispiel:

Ein strukturiertes Dekorlaminat umfassend eine Sichtseite und eine Substratseite, sichtseitig umfassend die folgenden unmittelbar aufeinanderfolgenden, miteinander haftend verbundenen Schichten F-A und substratseitig der Schicht A noch über eine Haftvermittlerschicht C eine dekortragende Polypropylen-Schicht D, wurde durch Coextrusion der Schichten F, A und C bei 250 °C und unmittelbar anschließende Schmelzekaschierung mit Schicht D noch bei 230 °C und einer Linienlast von 14,5 kN/m (145 N/cm) erhalten. Schicht F stellte sichtseitig die äußerste Schicht dar und enthielt 75 bis 100 Gew.-% extrudierbares thermoplastisches Ionomer; die an die Schicht F anschließende Schicht A enthielt 60 bis 95 Gew.-% extrudierbares thermoplastisches Ionomer und insgesamt 5 bis 40 Gew.-% eines nichtmigrierenden organischen Antistatikums.

Es wurde die Norm für die Begehspannung nach DIN EN 1815:2016-12 erfüllt, und die Schichten F-A-C waren praktisch vollständig transparent und klar.

## Patentansprüche

1. Dekorlaminat umfassend eine Sichtseite und eine Substratseite, sichtseitig umfassend mindestens die folgenden unmittelbar aufeinanderfolgenden, miteinander haftend verbundenen Schichten F-A und substratseitig der Schicht A noch eine oder mehrere dekortragende Schicht(en) D, **dadurch gekennzeichnet, dass**
die Schicht F sichtseitig die äußerste Schicht darstellt und 75 bis 100 Gew.-% extrudierbares thermoplastisches Ionomer enthält;
die an die Schicht F anschließende Schicht A 60 bis 95 Gew.-% extrudierbares thermoplastisches Ionomer enthält; und
Schicht A insgesamt 5 bis 40 Gew.-% eines oder mehrerer nichtmigrierender organischer Antistatika enthält.

2. Dekorlaminat nach Patentanspruch 1, **dadurch gekennzeichnet, daß** Schicht F frei von Antistatika ist.

3. Dekorlaminat nach Patentanspruch 1 oder 2, **dadurch gekennzeichnet, daß** Schicht F 75 bis 100 Gew.-%, bevorzugt 90 bis 97, insbesondere 95 Gew.-% eines oder mehrerer extrudierbarer thermoplastischer Ionomere enthält.

4. Dekorlaminat nach einem der Patentansprüche 1 bis 3, **dadurch gekennzeichnet, daß** Schicht A 60 bis 95 Gew.-%, bevorzugt 65 bis 85, insbesondere 70 bis 80 Gew.-% eines oder mehrerer extrudierbarer thermoplastischer Ionomere enthält.

5. Dekorlaminat nach einem der Patentansprüche 1 bis 4, **dadurch gekennzeichnet, daß** die Schichten F und A ein oder mehrere identische Ionomere enthalten, bevorzugt dasselbe Ionomer oder Ionomergemisch umfassen.

6. Dekorlaminat nach einem der Patentansprüche 1 bis 5, **dadurch gekennzeichnet, daß** Schicht A insgesamt 5 bis 40 Gew.-%, bevorzugt 15 bis 35, insbesondere 20 bis 30 Gew.-% eines oder mehrerer nichtmigrierender Antistatika enthält.

7. Dekorlaminat nach einem der Patentansprüche 1 bis 6, **dadurch gekennzeichnet, daß** Schicht F 0 bis 25 Gew.-%, bevorzugt 3 bis 10 Gew.-%, insbesondere 5 Gew.-% eines oder mehrerer Funktions- und/oder Füllstoffe enthält, wobei die Funktionsadditive bevorzugt ausgewählt sind aus der Gruppe bestehend aus UV-Stabilisatoren, UV-Absorber, Farbpigmenten, Wachsen, Gleitmitteln, Anti-Slip-Additiven, antimikrobiellen sowie dehäsiv wirkenden Additiven und Flammschutzmitteln sowie deren Gemischen und die Füllstoffe bevorzugt ausgewählt sind aus der Gruppe bestehend aus Korund, Titandioxid, Sand, Talkum, Kreide, Kieselsäure, Glasperlen sowie deren Gemischen.

8. Dekorlaminat nach einem der Patentansprüche 1 bis 7, **dadurch gekennzeichnet, daß** es frei von PVC, Vinylchloridmonomeren und/oder Melaminharz ist.

9. Dekorlaminat nach einem der Patentansprüche 1 bis 8, **dadurch gekennzeichnet, daß** die Schichtdicke der Schicht F 10 bis 100 µm, bevorzugt 20 bis 80 µm insbesondere 30 bis 50 µm beträgt.

10. Dekorlaminat nach einem der Patentansprüche 1 bis 9, **dadurch gekennzeichnet, daß** es zusätzlich gegebenenfalls eine, zwei oder mehrere weitere Schichten, die thermoplastische Polymere enthalten, umfaßt, zusätzlich optional eine oder mehrere Haftvermittlerschicht(en).

11. Dekorlaminat nach Patentanspruch 10, **dadurch gekennzeichnet, daß** mindestens eine dekortragende Schicht D ein extrudierbares thermoplastisches Polymer, ausgewählt aus der Gruppe bestehend aus Polyethylenen, Polypropylenen und Polybutylenen, Polystyrol, Polyamid, Polyester, sowie deren Gemischen, und optional bedrucktes Papier, enthält.

12. Dekorlaminat nach einem der Patentansprüche 1 bis 11, **dadurch gekennzeichnet, daß** in die Oberfläche des Dekorlaminats sichtseitig ein oder mehrere Muster oder Strukturen plastisch eingeprägt sind, wobei die plastischen Muster oder Strukturen weniger tief, gleich oder tiefer als die Schichtdicke der äußeren Schicht F eingeprägt sein können.

13. Verfahren zur Herstellung eines Dekorlaminats nach einem der Patentansprüche 1 bis 12, **dadurch gekennzeichnet, daß** mindestens die Schichten F und A coextrudiert werden.

14. Verwendung des Dekorlaminats nach einem der Patentansprüche 1 bis 12 als Bodenbelag oder in der Herstellung eines Bodenbelags, als Wand- oder Dachpaneele oder in der Herstellung von Wand- oder Dachpaneelen, als Möbelfolie, insbesondere in der Herstellung von Sperrholz- oder Spanplatten, als 3D-Folie, insbesondere in der Herstellung von Türen und Möbeln und/oder als graphische Folie, insbesondere Druckfolie.

## Claims

1. A decorative laminate comprising a visible side and a substrate side, comprising at least the following immediately consecutive and mutually bonded layers F-A on the visible side and also one or more decorative layer(s) D on the substrate side of the layer A, **characterised in that**:
the layer F represents the outermost layer on the visible side and contains 75 to 100% by weight of extrudable thermoplastic ionomer;
the layer A adjoining the layer F contains 60 to 95% by weight of extrudable thermoplastic ionomer; and
the layer A contains a total of 5 to 40% by weight of one or more non-migratory organic anti-static agents.

2. The decorative laminate according to patent claim 1, **characterised in that** the layer F contains no anti-static agents.

3. The decorative laminate according to patent claim 1 or 2, **characterised in that** the layer F contains 75 to 100% by weight, preferably 90 to 97, in particular 95% by weight of one or more extrudable thermoplastic ionomers.

4. The decorative laminate according to any one of patent claims 1 to 3, **characterised in that** the layer A contains 60 to 95% by weight, preferably 65 to 85, in particular 70 to 80% by weight of one or more extrudable thermoplastic ionomers.

5. The decorative laminate according to any one of patent claims 1 to 4, **characterised in that** the layers F and A contain one or more identical ionomers and preferably comprise the same ionomer or ionomer mixture.

6. The decorative laminate according to any one of patent claims 1 to 5, **characterised in that** the layer A contains a total of 5 to 40% by weight, preferably 15 to 35, in particular 20 to 30% by weight of one or more non-migratory organic anti-static agents.

7. The decorative laminate according to any one of patent claims 1 to 6, **characterised in that** the layer F contains 0 to 25% by weight, preferably 3 to 10% by weight, in particular 5% by weight of one or more functional and/or filler materials, wherein the functional additives are preferably selected from the group consisting of UV stabilisers, UV absorbers, colour pigments, waxes, lubricants, anti-slip additives, anti-microbial and dehesively acting additives and flame retardants and mixtures of the same, and the filler materials are preferably selected from the group consisting of corundum, titanium oxide, sand, talc, chalk, silica, glass beads and mixtures of the same.

8. The decorative laminate according to any one of patent claims 1 to 7, **characterised in that** it contains no PVC, vinyl chloride monomers and/or melamine resin.

9. The decorative laminate according to any one of patent claims 1 to 8, **characterised in that** the layer thickness of the layer F measures 10 to 100 µm, preferably 20 to 80 µm, in particular 30 to 50 µm.

10. The decorative laminate according to any one of patent claims 1 to 9, **characterised in that** it additionally comprises, as applicable, one, two or more other layers which contain thermoplastic polymers, and optionally one or more tie layer(s).

11. The decorative laminate according to patent claim 10, **characterised in that** at least one decorative layer D contains an extrudable thermoplastic polymer selected from the group consisting of polyethylenes, polypropylenes and polybutylenes, polystyrene, polyamide, polyester and mixtures of the same, and optionally paper which is printed on.

12. The decorative laminate according to any one of patent claims 1 to 11, **characterised in that** one or more patterns or structures are plastically embossed into the surface of the decorative laminate on the visible side, wherein the plastic patterns or structures are less deep, as deep or deeper than the layer thickness of the outer layer F can be embossed.

13. A method for manufacturing a decorative laminate according to any one of patent claims 1 to 12, **characterised in that** at least the layers F and A are coextruded.

14. The use of the decorative laminate according to any one of Claims 1 to 12 as a floor covering or in the manufacture of a floor covering, as wall panels or roof panels or in the manufacture of wall panels or roof panels, as furniture film, in particular in the manufacture of plywood board or chipboard, as a 3D film, in particular in the manufacture of doors and furniture and/or as a graphic film, in particular a printed film.

## Revendications

1. Stratifié décoratif comprenant un côté visible et un côté substrat, comportant du côté visible, au moins les couches suivantes FA se succédant immédiatement, jointes entre elles de manière adhésive et du côté substrat de la couche A, encore une ou plusieurs couches décoratives (D), **caractérisé en ce que**
la couche F constitue la couche la plus externe du côté visible et contient 75 à 100 % en poids d'ionomère thermoplastique extrudable ; la couche A contiguë à la couche F contient 60 à 95 % en poids d'ionomère thermoplastique extrudable ; et
la couche A contient au total 5 à 40 % en poids d'un ou de plusieurs antistatiques organiques non migrants.

2. Stratifié décoratif selon la revendication 1, **caractérisé en ce que** la couche F est exempte d'antistatiques.

3. Stratifié décoratif selon la revendication 1 ou 2, caractérisé en que la couche F contient 75 à 100 % en poids, de préférence 90 à 97 % en poids, en particulier 95 % en poids d'un ou de plusieurs ionomères thermoplastiques extrudables.

4. Stratifié décoratif selon l'une des revendications 1 à 3, **caractérisé en ce que** la couche A contient 60 à 95 % en poids, de préférence 65 à 85 % en poids, en particulier 70 à 80 % en poids d'un ou de plusieurs ionomères thermoplastiques extrudables.

5. Stratifié décoratif selon l'une des revendications 1 à 4, **caractérisé en ce que** les couches F et A contiennent un ou plusieurs ionomères identiques, de préférence le même ionomère ou mélange d'ionomères.

6. Stratifié décoratif selon l'une des revendications 1 à 5, **caractérisé en ce que** la couche A contient au total 5 à 40 % en poids, de
préférence 15 à 35 % en poids, en particulier 20 à 30 % en poids d'un ou de plusieurs antistatiques non migrants.

7. Stratifié décoratif selon l'une des revendications 1 à 6, **caractérisé en ce que** la couche F contient 0 à 25 % en poids, de préférence 3 à 10 % en poids, en particulier 5 % en poids d'une ou de plusieurs matières fonctionnelles et/ou de remplissage, les additifs fonctionnels étant choisis de préférence dans le groupe constitue des composés suivants : stabilisants aux UV, absorbants des UV, pigments colorants, cires, lubrifiants, additifs antidérapants, agents antimicrobiens, ainsi qu'additifs à action antiadhésive et agents retardateurs de flammes, et mélanges de ceux-ci, et les matières de remplissage étant choisies de préférence dans le groupe constitue des composés suivants : corindon, dioxyde de titane, sable, talc, craie, acide silicique, perles de verre et mélanges de ceux-ci.

8. Stratifié décoratif selon l'une des revendications 1 à 7, **caractérisé en ce qu'**il est exempt de PVC, de monomères de chlorure de vinyle et/ou de résine de mélamine.

9. Stratifié décoratif selon l'une des revendications 1 à 8, **caractérisé en ce que** l'épaisseur de la couche F atteint 10 à 100 µm, de préférence 20 à 80 µm, en particulier 30 à 50 µm.

10. Stratifié décoratif selon l'une des revendications 1 à 9, **caractérisé en ce qu'**il comprend en plus, le cas échéant, une, deux ou plusieurs autres couches, qui contiennent des polymères thermoplastiques, en plus, facultativement, une ou plusieurs couches favorisant l'adhérence.

11. Stratifié décoratif selon la revendication 10, **caractérisé en ce qu'**au moins une couche décorative D contient un polymère thermoplastique extrudable choisi dans le groupe constitue des composés suivants : polyéthylènes, polypropylènes et polybutylènes, polystyrène, polyamide, polyester, ainsi que les mélanges de ceux-ci et, facultativement, du papier imprimé.

12. Stratifié décoratif selon l'une des revendications 1 à 11, **caractérisé en ce que** dans la surface du stratifié décoratif, un ou plusieurs motifs ou structures sont plastiquement imprimés du côté visible, les motifs ou structures plastiques pouvant être imprimés de manière moins profonde, égale à ou plus profonde que l'épaisseur de couche de la couche externe F.

13. Procédé de fabrication d'un stratifié décoratif selon l'une des revendications 1 à 12, caractérisé ce qu'au moins les couches F et A sont coextrudées.

14. Utilisation du stratifié décoratif selon l'une des revendications 1 à 12 comme revêtement de sol ou dans la fabrication d'un revêtement de sol, comme panneaux de murs ou de toitures ou dans la fabrication de panneaux de murs ou de toitures, comme feuille de mobilier, en particulier dans la fabrication de panneaux d'aggloméré ou de particules, comme feuille 3D, en particulier dans la fabrication de portes et de meubles et/ou comme feuille graphique, en particulier comme feuille d'impression.
